# EUROPEAN PATENT APPLICATION

(11) **EP 4 571 406 A1**
(43) Date of publication of application: **18.06.2025**
(21) Application number: 23465574.4
(22) Date of filing: 13.12.2023
(51) Int. Cl.: G02F 1/133, G02F 1/13357

(54) **DISPLAY WITH INTEGRATED CAMERA**

(71) Applicant: Continental Automotive Technologies GmbH, 30175 Hannover (DE)
(72) Inventor: Coanda, Philip, 300704 Timisoara (RO); Feher, Albert, 300704 Timisoara (RO); Pasca, Andrei, 300704 Timisoara (RO); Mindescu, Christian, 30173 Hannover (DE); Balan, Catalin, 300704 Timisoara (RO)
(74) Representative: Continental Corporation

(57) **Abstract**

The present application relates to an apparatus and a vehicle comprising such apparatus. The apparatus comprises a display device (1) and a camera (3). The display device (1) comprises a cover glass (7), an LCD Panel (2), and a backlight unit. The LCD Panel (2) is arranged behind the cover glass (7), the backlight unit is arranged behind the LCD Panel (2) and the camera (3) is arranged behind the backlight unit with its field of view directed to the backlight unit. The field of view of the camera (3) defines an active area (9) of the camera (3). The backlight unit comprises an edge light source (8) and a light guide (5). The light guide (5) is a light guide (5) with microstructures (12). The camera (3) is operating in the infrared wavelength spectrum. The light guide (5) in the active area (9) of the camera (3) comprises a camera window (11) that defines an area in which the microstructures (12) are removed from the light guide (5).

## Description

The invention relates to a display with integrated camera and a vehicle with such integrated display.

Given the current trends in display technology, more and more OEMs (OEM: Original Equipment Manufacturer) from different sectors are looking to integrate a camera behind a display within their products. This type of approach can be found in consumer products such as smartphones, tablets, and laptops, currently raising the interest for automotive products also.

In addition to this, driver monitoring systems are becoming mandatory in order to be able to satisfy the new safety regulations, therefore the camera systems are starting to be integrated in different devices across a vehicle, such as cars, trucks, buses and so on.

In order to address this matter, various approaches have been used by OEMs and manufacturers from different industries looking to achieve seamless camera integration in their devices.

The technology used to integrate the camera behind a display is mainly influenced by the display type technology, such as LCD (LCD: Liquid Cristal Display) display and LED (LED: Light-Emitting Diode) display.

Smartphone manufacturers addressed this problem by firstly creating a notch within the display and installing the camera within the notch behind a cover glass of the display. However, such camera installed in the notch cannot be regarded as seamless integrated and as a camera behind a display.

To achieve a seamless camera integration behind a display, multiple options were identified. For example, EP 4 102 810 A1 and US 11 145 233 B1 describe the usage of a lower pixel density and/or of smaller pixels, for an active area of the camera. Hence, such approaches propose a lower pixel density and/or smaller pixels for the area where the camera captures the image to create enough space for the light to enter. Different pixel arrangements are also possible for such approaches, as this aspect can also have an effect for the quality of the picture. However, such solutions that are using lower pixel density and/or smaller pixels for the active area of a camera would result in that each platform or application would need a specially designed LCD panel to meet the requirements of the product, which additionally would result in an increase of complexity of the design and an increase in the costs of such solutions.

US 2020/0117034 A1 describes a camera installed behind an LCD display in a through hole. The LCD display comprises a cover glass, an optically clear adhesive (OCA: optically clear adhesive) layer, a first polarizer, a first glass substrate, a color film (CF: color film) layer, a thin film transistor (TFT: thin film transistor) layer, a second glass substrate, a second polarizer, and a backlight module. The through hole is provided through the first polarizer, the CF layer, the TFT layer, the second polarizer, and the backlight module. The through hole forms a light channel in the LCD for ambient light coming from outside of the electronic device, passing through the cover glass and the light channel, and entering into the camera. The camera is disposed in whole or in part inside the through hole. The first glass substrate and the second glass substrate are not hollowed out in a region corresponding to the light channel. However, such an approach requires a great deal of effort to align such a through hole in almost all parts of an LCD. Furthermore, drilling such through hole in nearly all parts of the LCD can result in damages in each single part of the LCD. Hence, the parts must be controlled for damages and a correct alignment with regard to the through hole. All the afore mentioned in turn leads to higher costs.

WO 2021/258921 A1 describes a camera device under a display screen. The display comprises a display screen and a camera. The display screen includes a cover at the top and a display module under the cover. The display module includes an ITO (ITO: Indium Tin Oxide) glass, a liquid crystal layer and a backlight layer. The display screen is provided with a blind hole area, which blind hole area is formed on the liquid crystal layer above an opening that goes through the whole backlight layer. The camera is arranged directly below the blind hole and a lens of the camera extends into the hole in the backlight layer onto the blind hole area, forming an angle of view through the blind hole. The display screen further includes an electric field circuit, which is provided on the ITO glass layer of the outermost layer of the liquid crystal layer, and which electric field circuit drives the deflection of the liquid crystal in the blind hole area of the display screen through the change of the electric field, so as to change the optical path of the light passing through the blind hole area, and to realize the focusing of the camera. Such approach is complicated to realize and means higher costs. Furthermore, a complete hole through the whole backlight layer would influence a light guide, in that the scatter of the light being disturbed in the area of the hole, resulting in image capture issues.

Furthermore, the development of seamless camera integrated devices is challenging due to the opacity of LCD panels and polarizers. LCD panels are composed of a liquid crystal layer sandwiched between two electrodes, together with the polarizers that are optical filters that transmit light of a particular polarization. Usually, common LCD panels have two polarizers, one for each side. When light passes through an LCD panel and polarizer, it is partially absorbed and scattered, which reduces the amount of light that reaches a camera sensor behind a display. This can lead to decreased image quality and reduced camera performance, thus an increased amount of hardware compensation is needed.

US 2022/0179452 A1 describes electronic devices including a front-facing camera disposed behind a front-facing display. Such device described in US 2022/0179452 A1 comprises a display having a front surface and a back surface, the display including a plurality of pixel regions that emit light from the front surface of the display to display a displayed image and a plurality of apertures that transmit light from the front surface to the back surface. A camera is disposed on a side of the back surface of the display. The camera is configured to capture images. The device further includes restoration optics disposed between the display and the camera, which restoration optics are configured to reduce image distortion caused by the display. It is further described that the restoration optics may include an optical filter (e.g., a phase-shift mask), a bandpass filter, a lens that includes a varifocal lens and/or different and/or additional components. It is further described that various items of the restoration optics can be included in the camera and therefore excluded from the restoration optics. Furthermore, a processor is coupled to the display and the camera, which processor is configured to apply a digital filter to at least a portion of the captured image to further reduce the image distortion caused by the display. Accordingly, the image distortion caused by the display is reduced both physically, by the restoration optics and digitally by the processor. Hence, a complex setup is described in US 2022/0179452 A1 that needs both physically and digitally reduction of image distortion caused by the display. However, such approach also leads to high efforts and results in high costs.

WO 2009/051673 A1 describes an image capture device, working in the visible spectrum, being placed behind a switchable diffuser and either behind a light guide or in a hole or opening within the light guide behind a display. The switchable diffuser is arranged in front of the light guide. WO 2009/051673 A1 further describes that a light guide typically has scattering elements, also referred to as scattering dots, on the backside of the light guide plate to scatter light that has been conducted from the backlight bulbs into the light guide plate, toward the front side of the LCD display assembly. Such scattering elements are also known from the state of the art as dot structures, microdots or microlenses, provided at a surface of the light guide, typically the backside of the light guide, used as described in WO 2009/051673 A1 to guide light towards the display panel. The amount of resulting light is defined by the density of a dot structure, microdot or microlens population. The higher the density, the more light will leave the light guide at its desired area. However, smaller densities are limited, as single microdots or microlenses will not produce homogeneous light output. While the dot structures are known as small printed white dots on the backside of the light guide, the microdots or microlenses are imprinted or injection molded microdots of hemisphere-like shape with spherical caps provided on a surface on the backside or a frontside of the light guide plate. The diameter of the spherical caps or rather the microdots or microlenses have a size of around tens of micrometers.

WO 2009/051673 A1 further describes the importance of the usage of the switchable diffuser to be able to capture sufficient light for the image capture device, to improve the uniformity of the light going through the LCD panel and to make the scattering elements less visible from a front side of the LCD.

Furthermore, to be able to obtain a clear image, the switchable diffuser, the LCD and the image capture device have to be accurately controlled to enable the camera to capture an image. WO 2009/051673 A1 therefore proposes a control logic for the LCD panel, camera and diffuser, to permit sufficient light to be captured by the camera. Hence, the solution known from WO 2009/051673 A1 needs an increased amount of logic and Hardware to perform all the mandatory steps in order to capture the image. Moreover, it can be difficult to integrate this type of solution in lower end, lower cost products considering the control logic needed to switch the diffuser and the LCD screen.

It is therefore an object of the present invention to provide an improved display with a seamless integrated camera behind the display.

This object is achieved by a display with integrated camera and a vehicle with such integrated display according to the independent claims. The dependent claims include advantageous further developments and improvements of the present principles as described below.

According to a first aspect, an apparatus comprises a display device and a camera. The display device comprises a cover glass, an LCD Panel, and a backlight unit. The LCD Panel is arranged behind the cover glass, the backlight unit is arranged behind the LCD Panel and the camera is arranged behind the backlight unit with its field of view directed to the backlight unit, more precisely to a light guide of the backlight unit further described below. The cover glass is the part of the display that is closest to a user looking at the display. For example, behind the cover glass means that the respective component behind the cover glass, in this case the LCD panel, is arranged on an opposite side of the display glass than the side of the display glass that a user is looking at when looking at the display. The field of view of the camera defines an active area of the camera. It is understood that the field of view and therefore the active area of the camera is larger if, for example, a wide-angle lens is used and/or the further away the camera is placed from the backlight unit. It is also understood that, conversely, the field of view and therefore the active area of the camera is smaller if, for example, a telephoto lens is used and/or the closer the camera is moved to the backlight unit.

The backlight unit comprises an edge light source and a light guide. The camera operates in the infrared wavelength spectrum. The advantage of the usage of a camera which operates in the infrared wavelength spectrum is that the IR light transmission is not or only weakly affected by the LCD panel and its polarizers. The term "operates in the infrared wavelength spectrum" means that the camera or rather an image capture element of the camera is at least sensitive to the infrared spectrum and at least captures images in the IR-spectrum (IR: infrared). It is understood that the camera can either be only operatable in the IR-spectrum, i.e., be arranged as an IR-Camera, or in addition to operating in the IR-spectrum also operating in the visible wavelength spectrum.

The light guide is a light guide with microstructures that in the active area of the camera comprises a camera window. The camera window defines an area in which the microstructures are removed from the light guide. It has been found that such a camera window free of microstructures does not or only weakly affect infrared light when compared to a light guide with microstructures. Hence, a light guide with a camera window from which the microstructures are removed is suitable to be used with cameras operating in the IR wavelength spectrum. Commonly, a surface of the light guide is provided with microstructures at a backside or a frontside of the light guide. However, when applied to the backside surface, such structures become less visible. It is understood that to provide such camera window, the microstructures are removed from the respective side of the light guide. It is further understood that to provide the camera window the microstructures can be removed in a whole or in part, e.g., from each microstructure a certain part is removed (partly removed microstructures) or every third microstructure is fully removed (reduced density of microstructures compared to the area outside the camera window). The term "microstructure" means that the structure, e.g., spherical caps at a surface of the light guide, have sizes between 10 µm and 100 µm with regard to their diameter or rather its largest extent in one dimension. The form, size and density of the elements, i.e., the density per a given area, can be individually chosen depending on the used light guide and the technical requirements of the whole apparatus, e.g., the display. For example, the form of such microstructure can be similar to a pyramid, a cone and/or a cylinder instead of a hemisphere like shape. Partly removed forms of such microstructure shapes to provide the camera window can be frustums of such forms, e.g., a frustum of a cone and/or frustum of a pyramid.

The present invention proposes a simple solution to obtain a seamless integration of a camera, e.g., a driver monitoring module, in a display, with no effect on the displayed content. E.g., the present solution removes the need for a switchable diffuser and increased logic to control it, given that the camera can capture an image only when the diffuser is set to "clear" state and the LCD panel to "transparent" state. The solution further removes the need of a through hole through parts of the LCD panel, the whole backlight unit and or the need to drive the deflection of the liquid crystal in a blind hole area of the display screen through the change of an applied electric field, to change the optical path of the light passing through the blind hole area, and to realize the focusing of the camera. Furthermore, with the solution there is no necessity of a physical reduction of an image distortion caused by the display, e.g., by using restoration optics.

Moreover, the proposed solution can accommodate the camera in any location of the LCD panel, given the fact that the solution can use any commercially available LCD screen with no additional processing needed. The proposed seamless integration of the camera behind the display provides an enhancement in user experience, yet with additional functionalities for the device.

According to an embodiment of the present application, the cover glass is optically bonded to the LCD Panel. The optical bonding is clear and it is understood that the cover glass and optical bonding material are transparent and do not affect the behavior of a captured image. By optically bonding the cover glass to the LCD Panel, an air gap between the cover glass and the LCD panel is eliminated and thus, e.g., the display performance, readability, touch accuracy, and impact resistance is improved.

According to a preferred embodiment of the present application the backlight unit further comprises a light enhancement layer. The light enhancement layer (4) comprises a cut-out window in the active area of the camera. It is understood that the light enhancement layer is arranged such that the light guide is arranged behind the light enhancement layer. The light enhancement layer may comprise one or more foils. It is further understood that the cut-out window, preferably is identical to the size of the active area. However, the cut-out window may be smaller than the size of the active area. This has the advantage that the cut-out window has less disturbing visible effect to the user watching at the display, e.g, a driver. Alternatively, the cut-out window may be larger than the size of the active area. This has the advantage that no negative influence of the light enhancement layer appears in the camera image. The term "cut-out window" in the light enhancement layer means that there is an area in the light enhancement layer defined by the active area of the camera, where the light enhancement layer is modified, for example there is a hole in a part of the light enhancement layer, and through which modified area the camera can look through in an undisturbed manner.

According to another embodiment of the present invention, the light enhancement layer is formed by a stack of foils comprising a Louver foil and/or a reflective polarizing foil and/or a diffusing foil at least one of which comprises the cut-out window. It is understood that dependent on the respective foil's properties, it can be sufficient if only one of the foils of the stack of foils comprises a cut-out window. For example, several foils of such stack of foils may not have or have only little effect on IR-light. The usage of a foil stack with foils having different properties has the advantage that the optical performance of such apparatus can be enhanced dependent on the technical requirements of the apparatus, e.g., the display.

According to another embodiment of the present application, the apparatus comprises a processor, the processor is provided to apply a post-processing algorithm, preferably a deconvolution algorithm, on a captured image taken by the camera. The post-processing algorithm enhances the quality of a captured image with regard to effects caused by the LCD panel on a captured image. It is understood that the post-processing algorithm preferably is a deconvolution algorithm. However, there exist further post-capture image processing methods to improve image quality of a captured image which may also advantageously used as such post-processing algorithm.

According to another embodiment of the present application, the size of the cut-out window is smaller than the active area. The camera is detecting image information of a first area within the cut-out window and of a second area outside the cut-out window. The detected image information from both areas is provided to the post-processing algorithm. Such embodiment advantageously provides information to calibrate the post-processing algorithm.

According to another embodiment of the present application, the LCD Panel comprises two polarizers at least one of which does not influence or only weakly influence IR light passing the respective polarizer. Such embodiment improves light yield in the IR-spectrum with the camera behind the display. It is understood that such embodiment may comprise a special physical arrangement of the at least one polarizer which enables at least a part of IR-light to pass the at least one polarizer. Preferably, a part of the at least one polarizer in the line of sight of the camera or the whole at least one polarizer comprises or consists of a material which enables at least a part of IR-light to pass the at least one polarizer.

According to another embodiment of the present application, the LCD Panel (2) comprises two polarizers, both of the polarizers do not influence or only weakly influence IR light passing the polarizers. Such embodiment further improves light yield in the IR-spectrum with the camera behind the display. It is understood that such embodiment may comprise a special physical arrangement of both polarizers which enables at least a part of IR-light to pass both polarizers. Preferably, a part of each of both polarizers in the line of sight of the camera or both polarizers in a whole comprise or consist of a material which enables at least a part of IR-light to pass both polarizers.

Preferably, the liquid crystal material of the LCD panel does not influence or only weakly influence IR light passing the LCD Panel. Such embodiment further improves light yield in the IR-spectrum with the camera behind the display, similar as described above with regard to polarizers.

According to another embodiment of the present application the microstructures are of hemisphere-like shape with spherical cap and/or of a cone-like shape with a cone-shaped cap and/or of a pyramidal-shape with a pyramidal cap and/or of a polygonal-shape with a corresponding polygonal cap and/or of a cylindrical-shape with a cylindrical cap. The form can be individually chosen depending on the used light guide and the technical requirements of the whole apparatus, e.g., the display.

According to another preferred embodiment of the present application the microstructures in the camera window are removed from the light guide in that the spherical cap and/or the cone-shaped cap and/or the pyramidal cap and/or the polygonal cap and/or the cylindrical cap is removed from the light guide in part. The term "in part" means that not the whole structure, e.g., the hemisphere-like shape with spherical cap and/or of a cone-like shape with a cone-shaped cap and/or of a pyramidal-shape with a pyramidal cap and/or of a polygonal-shape with a corresponding polygonal cap and/or of a cylindrical-shape with a cylindrical cap, must be removed. It has been found that it can be sufficient if only a part of the structure is removed to provide a camera window that is suitable to be used with cameras operating in the IR wavelength spectrum and which not or only weakly affect IR light passing the camera window. Partly removed forms of such microstructure shapes to provide the camera window can be frustums of such forms, e.g., a frustum of a cone and/or frustum of a pyramid. Only partly removing the microstructure in the camera window has the further advantage that the structure still has some effect of guiding light from the edge light source to LCD Panel. It is understood that the invention is not limited to the afore-mentioned forms of structures and that there exist plenty further forms that can be used for those structures.

According to a preferred embodiment of the present application the microstructures in the camera window are removed from the light guide in that the spherical cap and/or the cone-shaped cap and/or the pyramidal cap and/or the polygonal cap and/or the cylindrical cap is removed from the light guide in whole. The term "whole" means that the microstructures are fully removed from the area of the light guide that is defined by the camera window. Such embodiment fully removes effects of the microstructures regarding IR light. Hence, the fully removement further favors embodiments with no further processing needed. It is understood that the invention is not limited to the afore-mentioned forms of structures and that there exist plenty further forms that can be used for those structures.

According to a second aspect a vehicle comprises an apparatus in accordance with at least one of the afore-mentioned embodiments.

Yet described with regard to a usage of such display with seamless integrated camera behind the display, furthermore, such seamless integrated camera behind a display can be introduced in products that are following a user and provide an interactive experience given the orientation of the user's eyes, especially for entertainment activities. For example, the camera can be introduced in the back of a Smart TV display, and through specific and compatible content, the user can have a real-time experience with his digital twin like playing different games or participating in sport classes. A further example is an apparatus with a seamless integrated camera behind a display that additionally comprises a motion sensor input device that enables features such as skeleton tracking, hand interactions, and voice recognition. Such motion sensor can track the motion of the person in front of the device and create a link between the movement and a "digital twin" shown on the display. In order to do this, such motion sensor input device is equipped with RGB cameras and infrared projectors and detectors that can perform real-time gesture recognition. By placing the camera solution according to the invention behind the display of the monitor or TV a better experience for the user can be obtained, providing an integrated, seamless solution without the need of a second device.

Further features of the present invention will become apparent from the following description and the appended claims in conjunction with the figures.

### Figures

Fig. 1 shows a schematical sketch of an apparatus in accordance with a first embodiment of the invention in a cross-sectional view,
Fig. 2 shows a schematical sketch of an apparatus in accordance with a second embodiment of the invention in a cross-sectional view,
Fig. 3 shows a schematical sketch of an apparatus in accordance with a third embodiment of the invention in a perspective view, and
Fig. 4 shows a schematical sketch of a light guide with an enlarged view of the light guide in accordance with fig. 3.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

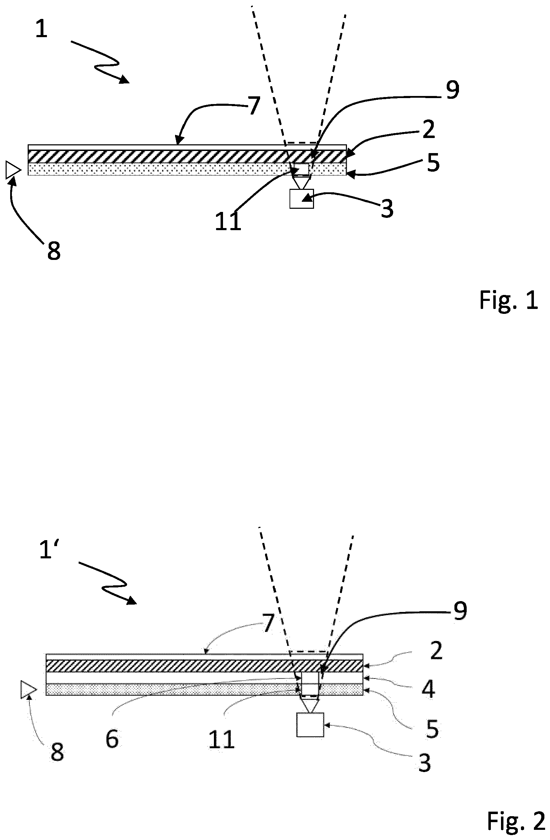

Fig. 1 shows a schematical sketch of an apparatus in accordance with a first embodiment of the invention in a cross-sectional view. The apparatus comprises a display device 1 and a camera 3 operating in the infrared wavelength spectrum. The display device 1 comprises a cover glass 7, an LCD Panel 2 and a backlight unit. The cover glass 7 is optically bonded to the LCD Panel 2, which LCD Panel 2 is arranged behind the cover glass 7. The backlight unit comprises a light source 8 disposed at the edge of the display device 1 and a light guide 5. The backlight unit, especially the light guide 5, is arranged behind the LCD Panel 2. The light source 8 is arranged at an edge of the light guide 5. The light emitted by the light source 8 is coupled into the light guide at the edge of the light guide 5. The camera 3 is arranged behind the backlight unit with its field of view directed to the backlight unit, more precisely to the light guide 5. The field of view of the camera 3 defines an active area 9 of the camera 3. The field of view of the camera is indicated by the dotted lines starting from camera 3. As can be seen, the active area 9 expands, with greater distance to the camera 3. The light guide 5 comprises microstructures 12 (not shown here) of a hemisphere-like shape with spherical caps of diameters around 10 µm to 100 µm. The light guide 5 further comprises, in the active area 9 of the camera 3, a camera window 11, which camera window 11 defines an area in which the microstructures 12 are removed from the light guide 5. Here, the spherical caps are fully removed from the area defined by the camera window. However, it is understood that there may be embodiments in which the microstructures in a camera window may only be removed in part from the light guide. Furthermore, the LCD Panel 2 comprises two polarizers (not shown here), both polarizers do not influence or only weakly influence infrared light passing the polarizers. Additionally, the liquid crystal material of the LCD panel 2 does not influence or only weakly influence Infrared light passing the LCD panel 2.

Fig. 2 shows a schematical sketch of an apparatus in accordance with a second embodiment of the invention in a cross-sectional view. The apparatus shown in Fig. 2 differs from that shown in Fig. 1 in that the backlight unit of the display 1' further comprises a light enhancement layer 4 arranged in front of the light guide 5. The light enhancement layer 4, here formed by only one foil, comprises a cut-out window 6 in the active area 9 of the camera 3.

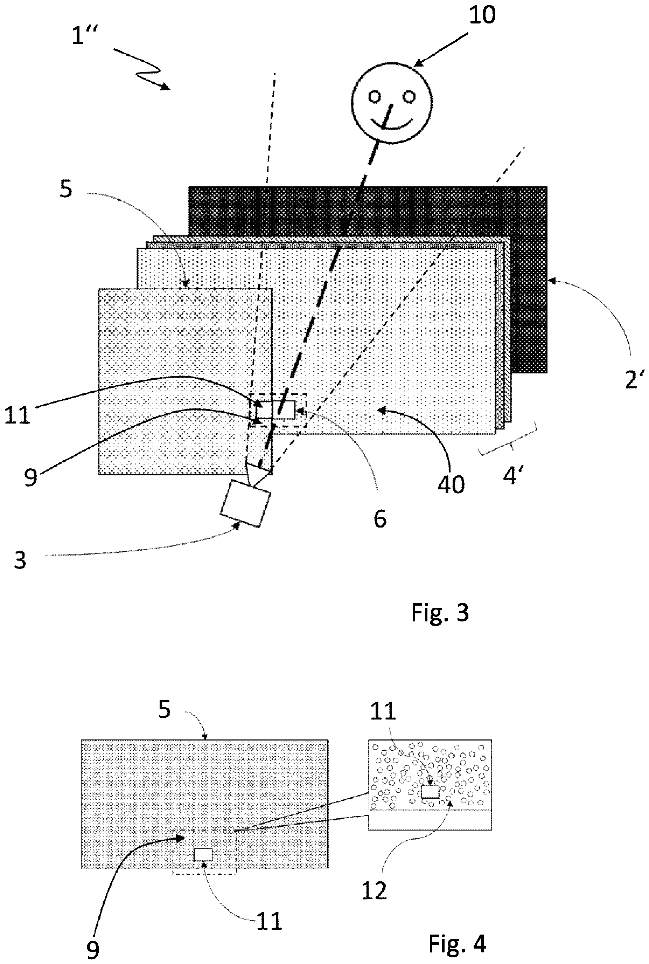

Fig. 3 shows a schematical sketch of an apparatus in accordance with a third embodiment of the invention in a perspective view. The apparatus comprises a display device 1" and a camera 3 operating in the infrared wavelength spectrum as in Fig. 2. The cover glass 7 is omitted in this figure for simplicity.

The difference in the embodiment shown in Fig. 3 with regard to the embodiment shown in Fig. 2 is that the light enhancement layer, in Fig. 3 is formed as a foil stack 4'. Only half of the light guide 5 and the camera window 11 is shown in Fig. 3 to highlight the cut-out window 6 in the light enhancement layer, here the foil stack 4'. Only the first foil 40, which is arranged nearest to the light guide 5 comprises a cut-out window 6 in the active area of the camera 3. However, it is understood that there may be embodiments in which a cut-out window is arranged in one or more further foils of the foil stack or through the whole foil stack 4'. Additionally, the LCD Panel 2' comprises two polarizers (not shown here) of which one does not influence or only weakly influence Infrared light passing the respective polarizer. Furthermore, in the embodiment in Fig. 3, the apparatus comprises a processor (not shown here), the processor is installed to apply a deconvolution algorithm on a captured image taken by the camera. Thereby, an image quality of a captured image is enhanced which is affected by the LCD panel, e.g., considering an alignment of pixels. This processor may be implemented as a separate device, may be integrated in a processor that also performs other tasks, may be implemented as other hardware or may also be implemented as an algorithm performed by a computing unit.

The light guide 5 with microstructures 12 and the camera window 11, in which camera window 11 the microstructures are removed, can be seen in more detail in an exemplary symbolic form in an enlarged view of the active area 9 of the camera 3, shown in Fig. 4.

In Fig. 3, a user 10, here a driver in a vehicle, is looking at the display device 1" and is monitored by the camera 3 which is arranged seamless behind the display device 1" and cannot be seen from the user as he is looking at the display device 1". The camera 3 is thus hidden from a view of the user 10.

## Claims

1. An apparatus comprising:
- a display device (1), and
- a camera (3),
- the display device (1) comprising:
- a cover glass (7),
- an LCD Panel (2), and
- a backlight unit,
- wherein the LCD Panel (2) is arranged behind the cover glass (7), the backlight unit is arranged behind the LCD Panel (2) and the camera (3) is arranged behind the backlight unit with its field of view directed to the backlight unit, the field of view of the camera (3) defining an active area (9) of the camera (3),
- wherein the backlight unit comprises an edge light source (8) and a light guide (5), and
- wherein the light guide (5) is a light guide (5) with microstructures (12), **characterized in that,**
- the camera (3) is operating in the infrared wavelength spectrum,
and
- the light guide (5) in the active area (9) of the camera (3) comprises a camera window (11), the camera window (11) defining an area in which the microstructures (12) are removed from the light guide (5).

2. An apparatus in accordance with claim 1, **characterized in that** the cover glass (7) is optically bonded to the LCD Panel (2).

3. An apparatus in accordance with one of claims 1 or 2, **characterized in that** the backlight unit further comprises a light enhancement layer (4), which light enhancement layer (4) comprises a cut-out window (6) in the active area (9) of the camera (3).

4. An apparatus in accordance with claim 3, **characterized in that** the light enhancement layer (4) is formed by a stack of foils (10) comprising a Louver foil and/or a reflective polarizing foil and/or a diffusing foil at least one of which comprises the cut-out window (6).

5. An apparatus in accordance with one of the preceding claims, **characterized in that** the apparatus comprises a processor, the processor being provided to apply a post-processing algorithm on a captured image taken by the camera (3).

6. An apparatus in accordance with claim 5, when dependent on one of claims 3 or 4, **characterized in that** the size of the cut-out window (6) is smaller than the active area (9), that the camera (3) is detecting image information of a first area within the cut-out window (6) and of a second area outside the cut-out window (6), and that the detected image information from both areas is provided to the post-processing algorithm.

7. An apparatus in accordance with one of the preceding claims, **characterized in that** the LCD Panel (2) comprises two polarizers at least one of which does not influence or only weakly influence Infrared light passing the respective polarizer.

8. An apparatus in accordance with one of the preceding claims, **characterized in that** the LCD Panel (2) comprises two polarizers, both of the polarizers do not influence or only weakly influence infrared light passing the polarizers.

9. An apparatus in accordance with one of the preceding claims, **characterized in that** the liquid crystal material of the LCD panel (2) does not influence or only weakly influence Infrared light passing the LCD panel (2).

10. An apparatus in accordance with one of the preceding claims, **characterized in that** the microstructures (12) are of hemisphere-like shape with spherical cap and/or of a cone-like shape with a cone-shaped cap and/or of a pyramidal-shape with a pyramidal cap and/or of a polygonal-shape with a corresponding polygonal cap and/or of a cylindrical-shape with a cylindrical cap.

11. An apparatus in accordance with claim 10, **characterized in that** the microstructures (12) in the camera window (11) are removed from the light guide (5) **in that** the spherical cap and/or the cone-shaped cap and/or the pyramidal cap and/or the polygonal cap and/or the cylindrical cap is removed from the light guide (5) in whole or in part.

12. A vehicle comprising an apparatus in accordance with one of the preceding claims.
